Europäisches Patentamt

**European Patent Office**

**Office européen des brevets**

(11) Publication number: **0 169 277**

**A1**

## (12) EUROPEAN PATENT APPLICATION

(21) Application number: **84304986.7**

(22) Date of filing: **23.07.84**

(51) Int. Cl.⁴: **A 01 F 15/14**

(43) Date of publication of application:
**29.01.86 Bulletin 86/5**

(84) Designated Contracting States:
**DE FR GB IT NL**

(71) Applicant: **JOHN DEERE (Société Anonyme)**
**20, Rue André Dessaux**
**F-45401 Fleury-les-Aubrais(FR)**

(72) Inventor: **Diot, Joel André**
**Les Crayes**
**F-70100 Chargey-les-Gray(FR)**

(74) Representative: **Collins, Geoffrey Stainton et al,**
**c/o Reddie & Grose 16 Theobalds Road**
**London WC1X 8PL(GB)**

(54) **Baling machine.**

(57) A baling machine has an apparatus (76) for tying twine
(136, 138) round a large cylindrical bale (74) of hay formed in
the machine. The twine (136, 138) is guided by a pair of arms
(114, 116) to a spiral (94) running across the machine and
rigidly attached to a drivable shaft (78). As the twine (136,
138) is drawn into the machine to wrap round the bale (74) it
travels along the spiral (94) and so moves to the outer ends
of the bale (74). A spiral portion (96, 98) is provided in respect
of each arm (114, 116) and these portions are connected at
the centre by a starter roller (86) enabling the twine (136, 138)
at the beginning of tying to slip along its surfaces (88) to be
introduced into the spiral portions.

FIG.3

EP 0 169 277 A1

Croydon Printing Company Ltd

## Baling Machine

This invention relates to a baling machine for forming cylindrical bales of crop having a chamber, in which crop is rolled into a bale, with a mouth through which crop passes to the chamber and apparatus for wrapping the bale formed in the chamber with twine or other tying material, guide means for guiding the tying material and cutting means for severing the wrapped tying material.

Machines, towed by a tractor, for forming large cylindrical bales of hay are known in which, as the machine advances, the crop is removed from a windrow by a pick-up mechanism and delivered rearwardly to a baling chamber where it is rolled into a bale between an upper and lower belt conveyor running in opposite directions, the bale rotating about a horizontal axis.

One such machine is described in British patent specification 1 477 260 of the present applicants. When a full sized bale has been formed it is ejected onto the ground from the rear of the machine through a gate assembly, the gate being swung rearwardly and upwardly.

In order to maintain the bale shape and to keep the hay within the bale, twine or other tying material is wound round the bale on its reaching full size in the baling chamber. The operation is carried out using a guide arm through which the twine is passed from a supply kept in a twine box. The twine arm is positioned just ahead of the mouth of the baling chamber so that a loose end of the twine which hangs from the guide arm is drawn into the baling chamber with the crop, is caught by the rotating bale and wraps round the bale. The twine arm is mounted to sweep across the laterally extending mouth to direct the twine along the length of the bale and thus the wrap of twine is helical in form. The movement of the twine is brought about, for example, by driving the arm hydraulically.

A baling machine of the present invention has a bale wrapping apparatus which can be simple but nevertheless accurate in directing twine to the bale.

According to the present invention the wrapping apparatus comprises an elongated member, with a spiral guide path for the tying material, which member is drivable to rotate it and is aligned with the mouth of the chamber so that the tying material can be drawn into the chamber and travel along the spiral path so as to be advanced across the chamber mouth and to wrap round the bale along its length.

An embodiment of the invention will now be described with reference to the accompanying diagrammatic drawings in which:

Fig. 1    is a right front perspective view of a machine for forming large cylindrical bales in a non-operating condition;

Fig. 2    is a partly schematic side elevation view of the machine with portions of the side removed to show more clearly the bale, which has almost reached its full size;

Fig. 3    is a view of a right hand front portion of the machine with parts removed to show apparatus for wrapping the bale with tying twine including a coil or spiral for guiding the twine; and

Fig. 4   is a front view of an alternative form of
spiral to that in Fig. 3.

In the drawings, the machine includes a mobile main frame 10,
the frame being mounted on a pair of wheels 12 of which one
only is shown, and is the type of machine described and
claimed in our British patent specification 1 477 260. The
main frame 10 includes a pair of upright frame members 14
extending upwardly from a transverse axle 15 for the wheels
12, the upright frame members being disposed immediately inwardly of the wheels at opposite sides of the machine. Two
generally fore-and-aft frame members 16 respectively intersect and are connected to the upright frame members 14 to
form inverted T-shaped frames on opposite sides of the machine, and a transverse beam 18 spans the width of the machine and connects the forward ends of the fore-and-aft members 16. Only the right hand frame members 14, 16 are shown.
An implement tongue 20 extends forwardly from the centre of
the transverse beam 18 for connection to a tractor in a conventional manner.

A pair of upright, fore-and-aft side panels 22 and 24 is
connected to the inner sides of the opposite upright frame
members 14 and the opposite fore-and-aft frame members 16,
the side panels 22 and 24 forming the opposite sides of a
baling chamber within the machine. A pair of downwardly and
forwardly inclined frame members 26 (again only the right
hand one being indicated) respectively extends from the upper ends of the upright frame members 14 along the upper
forward side of the side panels. An upper transverse beam
28 interconnects the forward ends of the inclined frame
members 26.

A pick-up mechanism 30 which is of the well known type
utilized on balers for picking up crop material lying in
a windrow and which therefore will not be described in detail is mounted on the main frame 10 by a pair of arms 32 pivoted to the main frame at 34 to permit vertical swinging adjustment of the pick-up mechanism. A generally U-shaped horizontally disposed finger type compressor mechanism 36 has its opposite ends connected to the opposite sides of the main frame 10 and extends forwardly therefrom over the pick-up mechanism.

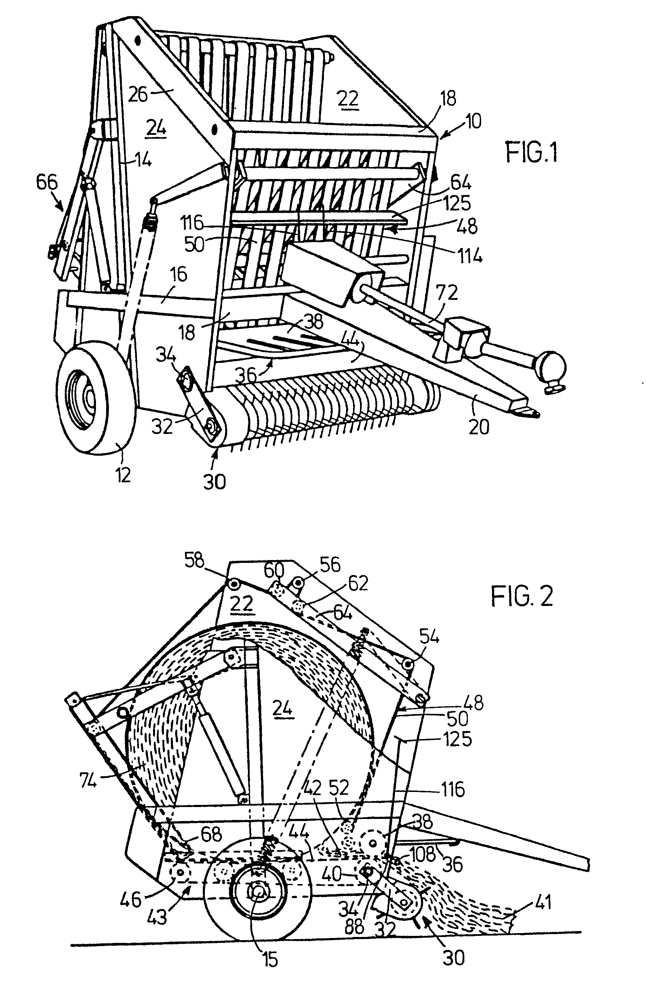

A pair of vertically spaced, transverse, oppositely rotating compressor rolls 38 and 40 extends between the opposite side panels 22, 24 immediately to the rear of the pick-up mechanism. The upper compressor roll 38 rotates in a clockwise direction, and the lower roll 40 rotates in an anticlockwise direction as viewed in Fig. 2. As is apparent in Fig. 2, the pick-up mechanism elevates the crop lying in a windrow 41 and delivers it upwardly and rearwardly to the bite of the compressor rolls 38, 40 which engage the crop and pass it rearwardly between the rolls in a mat 42.

The mat leaving the compressor rolls 38, 40 is deposited on top of a horizontal lower conveyor 43 formed by an endless flexible belt 44 which spans the width of the baling chamber and is trained around the lower compressor roll 40 and a rear roller 46 which also extends between the opposite side panels adjacent the lower rear corner thereof.

An upper conveyor 48 is also disposed between the opposite side panels 22, 24 and includes a plurality of side by side endless flexible belts 50. The belts 50 are trained around a transverse lower front roller 52, an upper front roller 54, and a pair of upper rear rollers 56 and 58. These rollers all rotate and engage the inner side of the belts 50. A pair of idler rollers 60 and 62 is mounted on and extends between the rearward ends of a pair of fore-and-aft arms 64 which are spring loaded and pivoted at their forward ends to bias the arms downwardly to maintain belt tension.

A rear gate assembly 66 allows the rearward discharge of formed bales and includes lower and upper transverse rollers 68 and 70 respectively over which the upper conveyor belts are also trained.

The pick-up and the conveyor rollers are driven from the tractor which is equipped with a power take-off mechanism, in the conventional manner, the baler being provided with a fore-and-aft driveshaft 72 above the tongue 20.

The upper run of the lower conveyor 43 moves rearwardly during the baling process, while the lower run of the upper conveyor 48, which is opposite the lower conveyor moves forwardly. The portion of the upper conveyor belts 50 extending between the rear roller 68 and the fixed lower front roller 52 is the bale engaging portion of the upper conveyor, the area or zone between the upper run of the lower conveyor 43 and the bale engaging portion of the upper conveyor 48 defining a baling chamber for a bale 74.

In operation, as the machine advances across a field of windrowed crop, the pick-up mechanism 30 raises the windrow 41 and moves it rearwardly to the compressor rolls 38 and 40 which deliver the crop rearwardly in the mat 42 to the baling chamber where it is engaged by the rearwardly moving upper run of the lower conveyor 43 and the forwardly moving run of the upper conveyor 48. The oppositely moving belt runs tend to roll the hay and the size of the roll of hay in the baling chamber increases, the bale 74 being supported from below on the upper run of the lower conveyor while the upper conveyor substantially envelops the remainder of the bale.

Thus far, the details of the machine are those already described more extensively in our above mentioned British patent specification 1 477 260.

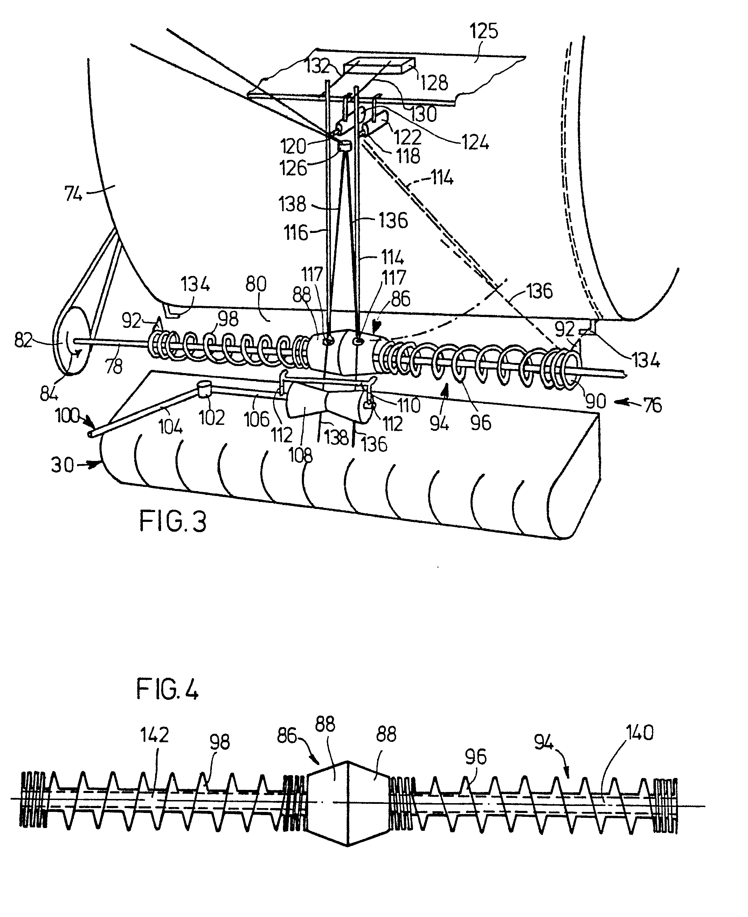

On the bale 74 reaching the size shown in Fig. 2, it is necessary to tie it with twine to maintain its shape before it is discharged from the machine. This is accomplished by a bale wrapping apparatus 76 (as shown in Fig. 3) disposed just ahead of the mouth 80 of the baling chamber.

In particular, a horizontal transverse driven shaft 78 extends across the width of the machine in alignment with mouth 80 of the baling chamber, an adjustable speed pulley 82 being rigidly connected to the right hand end of the shaft 78 for driving it in the direction of arrow 84, i.e. anticlockwise when viewed from the left side of the machine. Rigidly mounted on the centre portion of the shaft 78 there is a rubber twine starter roller 86 which is in the form of two frusto-cones joined at their bases so that the roller provides a pair of surfaces 88 sloping downwardly in the outward direction. The outer ends of the shaft 78 each carry a disc 90 on which a triangular knife blade 92 extends radially outwardly. A coil or spiral 94, coaxial with, and rigidly attached to, the shaft 78, runs respectively between the starter roller 86 and each disc 90, there being a left hand spiral portion 96 and a right hand spiral portion 98 formed from rod. Each of these portions has a smaller pitch at its two ends. A bell crank type lever 100 is disposed ahead of the spiral 94 for swinging movement about a vertical pivot post 102 mounted on top of the pick-up 30, one arm 104 of the lever extending forwardly of the post and being connected to a cable (not shown) running to the tractor cab and the other 106 running transversely of the machine. The arm 106 carries a freely rotatable twine engaging roller 108 which is aligned with the starter roller 86 and conforms to its shape in being in the form of a pair of frusto-cones joined at their tops. Additionally, the arm 106 has a twine stop rail 110 mounted on it which runs horizontally just above the twine engaging roller 108 and turns at its ends toward the starter roller 86 and which is connected to the arm 106 by vertical posts 112 at either end of the roller 108. The disposition of the roller 108 is such that, on the arm 104 being swung appropriately, the roller 108 is brought into contact with the twine starter roller 86 and rotates with it.

A pair of twine guide arms in the form of rods 114, 116, which are vertical in their starting position shown in full lines in Fig. 3 and which have twine receiving rings 117 at their lower ends, is provided above the starter roller 86. The guide arms have a pair of horizontal stub shafts 118, 120, near their upper ends, which are received in pivot blocks 122, 124 allowing the arms 114, 116 to swing freely, although the arms are spring biased to their vertical position. The pivot blocks are suspended from a cross support beam 125. A short cylindrical guide or grommet 126 for twine, also suspended from the support beam, is provided between the guide arms 114, 116 (when in their vertical position) below the pivot blocks 122, 124. Rearwardly of the upper ends of the guide arms 114, 116 is a switch box 128 which is mounted again on the support beam 125 and which has two contacts 130, 132 which engage the arms 114, 116 respectively when these are at their vertical starting position only. For the sake of clarity in Fig. 3, the switch box 128, the pivot blocks 122, 124 and their support beam 125 have been drawn somewhat out of proportion. The switch box 128 is electrically connected to a visual or sound indicator, e.g. a lamp, in the vicinity of the tractor driver for providing him with an indication that tying is taking place.

A twine stop 134 is provided at each end of the mouth 80 of the baling chamber. The stops 134 are L-shaped rods mounted on the main frame 10 with the free arm of each "L" pointing inwardly.

The twine itself is contained in two twine boxes (not shown). A strand of twine 136, 138 from each box is fed through the grommet 126 and thence through the rings 117 of the guide arms 116, 114. The free ends of the twine strands 136, 138 hang down loosely between the twine starter roller 86 and the twine engaging roller 108.

The operation of the wrapping apparatus 76 will now be described.

With the bale 74 at the size shown in Fig. 2, the arm 104 of the bell crank 100 is swung to move the twine engaging roller 108 toward the starter roller 86 until the twine strands 136 and 138 are gripped between the two rollers. The twine is drawn thereby through the guide arms 114, 116 into the crop material being fed through the mouth 80 of the baling chamber and taken by the crop to the rotating bale 74 where it starts wrapping round the bale with the crop being fed. The twine strands 136, 138 will be under tension by virtue of their being pulled to the bale and will therefore tend to slip respectively along the sloping surfaces 88 of the starter roller 86 toward the corresponding spiral portions 96 and 98. The strands 136, 138 are then engaged by the portions 96 and 98 respectively and travel along the portions at the same time causing the guide arms 114 and 116 to swing away from their vertical positions about the pivot blocks 122, 124. In this way, the twine strands 136, 138 start wrapping the bale at its mid portion and follow a spiral path round the bale until they reach the outer ends of the spiral portions 96, 98. Since the pitch is smaller at the two ends of each portion 96, 98 there are more turns of twine round the bale 74 at its middle part and its outer ends. The twine stops 134 limit movement outwardly of the twine strands 136, 138 and cause the outermost turns of twine to be superimposed one on another. At this stage the left hand twine guide arm 136 is in its finishing position shown in broken lines in Fig. 2, and the right hand arm 138 is at a corresponding position which is not illustrated. Finally the knife blades 92 cut the twine strands 136, 138. Then, there being no pull upon the twine, the guide arms are free to return under their spring loading to their vertical starting position. The free ends of the twine strands 136, 138 then hang downwardly but cannot become gripped once more between the twine engaging roller 108 and the starter roller 86 because the turned ends of the stop rail 110 block their path.

The wrapped bale 74 is ejected from the bale chamber and the bell crank 100 is swung back to move the twine engaging roller 108 with the rail 110 away from the starter roller 86. The twine strands can then again overhang the starter roller in readiness for the baling and tying cycle to be repeated.

The spiral portions 96, 98 in Fig. 3 are, as just described, in the form of open coils, but they can be produced as closed coils, as illustrated in Fig. 4, by moulding from a hard strong plastics material. In this event, the left hand spiral portion 96 is formed as one moulding and the right hand spiral portion 98 as another. They are produced with longitudinal bores 140, 142 to receive the driven shaft 78 which is fixed to the portions 96, 98, the starter roller 86 being mounted as before between the two portions.

## Claims

1. A baling machine for forming cylindrical bales of crop having a chamber, in which crop is rolled into a bale (74), with a mouth (80) through which crop passes to the chamber and apparatus (76) for wrapping the bale formed in the chamber with twine or other tying material, guide means (114, 116, 117) for guiding the tying material (136, 138) and cutting means (92) for severing the wrapped tying material (136, 138), characterised in that the wrapping apparatus (76) comprises an elongated member (94), with a spiral guide path for the tying material (136, 138), which member is drivable to rotate it and is aligned with the mouth (80) of the chamber so that the tying material can be drawn into the chamber and travel along the spiral path so as to be advanced across the chamber mouth (80) and to wrap round the bale (74) along its length.

2. A baling machine according to claim 1 characterised in that the elongated member comprises a spiral (94) on a drivable shaft (78) extending through the spiral.

3. A baling machine according to claim 2 characterised in that the spiral (94) comprises two spiral portions (96, 98) of opposite hand and the wrapping apparatus (76) includes a tying material starter roller (86) connected between the spiral portions and formed so as to direct the tying material (136, 138) into the spiral on initiation of wrapping.

4. A baling machine according to claim 3 characterised in that the pitch of the spiral portions (96, 98) is smaller at their ends.

5. A baling machine according to claim 3 or 4 characterised in that the tying material starter roller (86) is in the form of two frusto-cones joined at their bases.

6. A baling machine according to any of claims 2 to 5 characterised in that the spiral (94) is open comprising a coil of rod.

7. A baling machine according to any of claims 2 to 5 characterised in that the spiral (94) is formed from a plastics material by moulding.

8. A baling machine according to any of claims 3 to 7 characterised in that the cutting means (92) comprise a disc (90) at each outer end of the spiral portions (96, 98) rigidly attached at its centre to the shaft (78) and a knife blade (92) extending from the periphery of each disc.

9. A baling machine according to any of claims 3 to 8 characterised in that the apparatus (76) includes a freely rotatable twine engaging roller (108) conforming to the shape of the tying material (136, 138) starter roller (86) and movable between a position in which tying material hanging over the starter roller is gripped between the tying material engaging roller and the starter roller and a position clear of the starter roller.

10. A baling machine according to claim 9 characterised in that the tying material engaging roller (108) is mounted on an arm (106) of a bell crank lever (100) for the said movement toward and away from the starter roller (86).

11. A baling machine according to claim 8 or 10 characterised in that a tying material stop rail (110) is mounted above the tying material engaging roller (108), the rail having

0169277

ends cranked rearwardly to prevent tying material moving inwardly of the ends of the rollers (86, 108) when the tying material engaging roller (108) is not clear of the starter roller (86).

12. A baling machine according to any preceding claim characterised in that the said elongated member (94) is drivable at a variable speed.

13. A baling machine according to any preceding claim characterised in that the guiding means comprise a pair of tying material guide arms (114, 116, 117) each swingable between an upright starting position in which tying material (136, 138) hangs freely downwardly and an angled finishing position in which tying material wraps an outer end portion of the bale (74).

14. A baling machine according to claim 13 characterised in that the apparatus (76) includes means (128, 130, 132) for detecting and indicating that the guide arms (114, 116) are away from their upright starting position.

15. A baling machine according to claim 14 characterised in that the detecting and indicating means include a switch box (128) which has contacts (130, 132) respectively engaging the guide arms (114, 116) at their upright starting position and being out of engagement away from this position so as to provide a signal when out of engagement.

16. A baling machine according to any preceding claim characterised in that the apparatus (76) includes tying material stops (134) to limit outward movement of the tying material (136, 138) along the bale (74).

FIG.1

FIG. 2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | EP-A-0 071 687 (JOHN DEERE) <br> * Figure 2 * | 1,2 | A 01 F 15/14 |
| | --- | | |
| A | US-A-3 237 876 (G. FRANZEN) <br> * Figure 10; column 3, lines 17-22 * | 1,6 | |
| | --- | | |
| A | DE-A-1 685 982 (SAURER-ALLMA) <br> * Figures 1,4; claim 2 * | 1,2 | |
| | --- | | |
| A | GB-A-2 038 706 (JOSE MARIA POMAR GOMA) <br> * Figures 2,4,5 * | 4 | |
| | --- | | |
| A | DE-A-2 917 852 (MASCHINENFABRIKEN BERNARD KRONE) <br> * Figure 2 * | 1 | |
| | | | TECHNICAL FIELDS SEARCHED (Int Cl 4) |
| | --- | | A 01 F 15/00 |
| A | FR-A-2 457 636 (HESSTON CORP.) <br> * Figures 3-8 * | 13 | A 01 F 15/14 <br> B 65 H 54/34 |
| | --- | | |
| A | DE-A-2 831 315 (MASCHINENFABRIKEN BERNARD KRONE) <br> * Figure 6 * | 8 | |
| A | * Figure 5 * | 16 | |
| | ----- | | |

The present search report has been drawn up for all claims

| Place of search | Date of completion of the search | Examiner |
|---|---|---|
| THE HAGUE | 21-03-1985 | SAMWEL P.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82